(19) Europäisches Patentamt
European Patent Office
Office européen des brevets

(11) **EP 3 303 659 B1**

(12) **FASCICULE DE BREVET EUROPEEN**

(45) Date de publication et mention
de la délivrance du brevet:
**24.07.2019 Bulletin 2019/30**

(21) Numéro de dépôt: **16741055.4**

(22) Date de dépôt: **02.06.2016**

(51) Int Cl.:
**C25B 15/02** (2006.01)       **C25B 15/08** (2006.01)
**C25B 1/12** (2006.01)

(86) Numéro de dépôt international:
**PCT/FR2016/051324**

(87) Numéro de publication internationale:
**WO 2016/193633 (08.12.2016 Gazette 2016/49)**

(54) **SYSTÈME DE PRODUCTION DE DIHYDROGÈNE, ET PROCÉDÉ ASSOCIÉ**

SYSTEM ZUR ERZEUGUNG VON DIHYDROGEN UND ZUGEHÖRIGES VERFAHREN

SYSTEM FOR PRODUCING DIHYDROGEN, AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2015 FR 1555016**

(43) Date de publication de la demande:
**11.04.2018 Bulletin 2018/15**

(73) Titulaire: **Electricité de France**
**75008 Paris (FR)**

(72) Inventeur: **COLOMAR, David**
**67500 Haguenau (FR)**

(74) Mandataire: **Regimbeau**
**87 rue de Sèze**
**69477 Lyon Cedex 06 (FR)**

(56) Documents cités:
- **RIVERA-TINOCO R ET AL: "Influence of cell support and operating parameters on the competitiveness of high-temperature electrolysis process", INTERNATIONAL JOURNAL OF GREEN ENERGY, TAYLOR & FRANCIS INC, US, vol. 7, no. 1, 1 janvier 2010 (2010-01-01) , pages 1-20, XP008126101, ISSN: 1543-5075, DOI: 10.1080/15435070903364905**

- **SIGURVINSSON ET AL: "Can high temperature steam electrolysis function with geothermal heat?", INTERNATIONAL JOURNAL OF HYDROGEN ENERGY, ELSEVIER SCIENCE PUBLISHERS B.V., BARKING, GB, vol. 32, no. 9, 23 mai 2007 (2007-05-23), pages 1174-1182, XP022093239, ISSN: 0360-3199, DOI: 10.1016/J.IJHYDENE.2006.11.026 cité dans la demande**

- **LAURENCELLE F ET AL: "Experimental study on a metal hydride based hydrogen compressor", JOURNAL OF ALLOYS AND COMPOUNDS, ELSEVIER SEQUOIA, LAUSANNE, CH, vol. 475, no. 1-2, 5 mai 2009 (2009-05-05) , pages 810-816, XP026035654, ISSN: 0925-8388, DOI: 10.1016/J.JALLCOM.2008.08.007 [extrait le 2008-09-24]**

- **LAURENCELLE F ET AL: "Integrated electrolyser-metal hydride compression system", INTERNATIONAL JOURNAL OF HYDROGEN ENERGY, ELSEVIER SCIENCE PUBLISHERS B.V., BARKING, GB, vol. 31, no. 6, 1 mai 2006 (2006-05-01), pages 762-768, XP024900034, ISSN: 0360-3199, DOI: 10.1016/J.IJHYDENE.2005.06.019 [extrait le 2006-05-01]**

- **VANHANEN J P ET AL: "Combined hydrogen compressing and heat transforming through metal hydrides", INTERNATIONAL JOURNAL OF HYDROGEN ENERGY, ELSEVIER SCIENCE PUBLISHERS B.V., BARKING, GB, vol. 24, no. 5, 1 mai 1999 (1999-05-01), pages 441-448, XP004164821, ISSN: 0360-3199, DOI: 10.1016/S0360-3199(98)00095-0**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- LOTOTSKYY M V ET AL: "Metal hydride hydrogen compressors: A review", INTERNATIONAL JOURNAL OF HYDROGEN ENERGY, vol. 39, no. 11, 26 février 2014 (2014-02-26), pages 5818-5851, XP028832525, ISSN: 0360-3199, DOI: 10.1016/J.IJHYDENE.2014.01.158 cité dans la demande

**Description**

DOMAINE TECHNIQUE GENERAL

La présente invention concerne un système de production de dihydrogène par électrolyse.

ETAT DE L'ART

Dans un contexte de fort développement des solutions décarbonnées, c'est-à-dire faiblement émissifs en dioxyde de carbone, pour la mobilité et le transport de biens et de passagers, le dihydrogène apparait comme un carburant prometteur.

Son utilisation, associé à des piles à combustible et à un moteur électrique dans un véhicule, peut représenter une alternative aux carburants fossiles, surtout s'il est produit par des énergies elles-mêmes propres, notamment par électrolyse de l'eau. Certains constructeurs, comme Toyota, ont déjà commencé la commercialisation de véhicules à hydrogène, d'autres introduiront leurs premiers véhicules d'ici 2020.

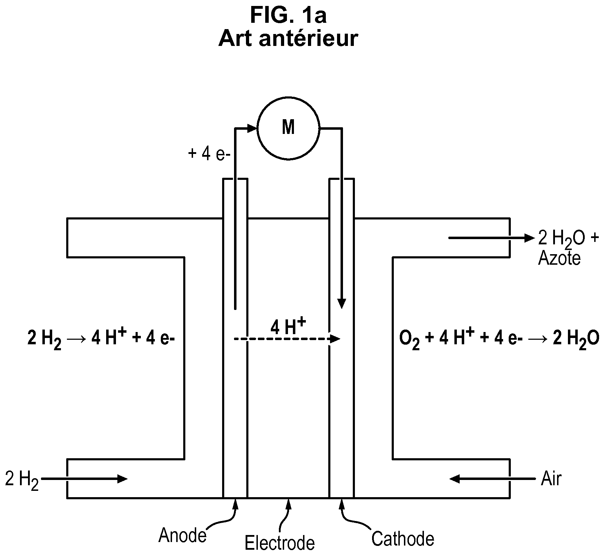

Le fonctionnement d'une pile à combustible (dont un exemple est représenté par la **figure 1a**) est régi par les réactions d'oxydo-réduction suivantes :

- A l'anode : $2H_2 \rightarrow 4H^+ + 4e^-$
- A la cathode : $O_2 + 4H^+ + 4e^- \rightarrow 2H_2O$

Le flux d'électrons produits à l'anode peut ainsi alimenter une charge électrique avant d'être réacheminé jusqu'à la cathode.

L'hydrogène est aujourd'hui majoritaire produit en grande quantité par vaporeformage d'hydrocarbures, principalement de gaz naturel (méthane, la réaction de vaporeformage étant alors décrite par l'équation suivante : $CH_4 + 2 H_2O + chaleur \rightarrow 4 H_2 + CO_2$), transporté et livré par camions dans des cadres bouteilles à 200 bar à la station-service, où il est comprimé dans un compresseur jusqu'à des pressions de 450 à 900 bar, avant d'être stocké dans des réservoirs à haute pression dans la station-service (en effet la faible densité volumique du dihydrogène gazeux - 89 grammes, soit 3,54 kWh d'énergie, dans un mètre cube de d'hydrogène dans les conditions normales de température et de pression - implique de le comprimer autour de 700 bar pour atteindre une densité suffisante pour l'utilisation comme carburant).

Cette méthode de production par vaporeformage présente l'avantage d'être industriellement mature et peu coûteuse. Toutefois, elle présente de nombreux inconvénients : elle consomme de l'énergie fossile, est fortement émettrice de dioxyde de carbone, et elle n'est bien adaptée qu'à la production massive dans des unités de grande taille (jusqu'à plusieurs centaines de MW). Dans le cas d'une utilisation décentralisée de l'hydrogène, il faut donc transporter par camion l'hydrogène produit, et le livrer en cadres bouteilles, ce qui entraîne des coûts économiques et énergétiques substantiels.

Aussi, les industriels se tournent de plus en plus vers une technologie alternative : l'électrolyse de l'eau, qui utilise de l'électricité au lieu des énergies fossiles pour séparer l'hydrogène de l'oxygène et peut être réalisée dans de petites unités décentralisées, voire sur le lieu où l'hydrogène est utilisé, par exemple la station-service. Le principe de l'électrolyse peut être résumé par l'équation suivante : 2 H2O + électricité → 2 H2 + 02.

L'électrolyse présente de nombreux avantages : elle ne produit pas de dioxyde de carbone si l'électricité est décarbonnée (par exemple d'origine nucléaire ou renouvelable), elle est flexible et peut donc apporter des services au réseau électrique et c'est une technologie modulaire, qui peut être de petite taille (moins d'un MW) et donc bien adaptée à la production décentralisée. En revanche, elle présente l'inconvénient de consommer une énergie chère : l'électricité. Aussi, la question de son rendement est cruciale.

Il existe trois principales technologies d'électrolyse. Les deux premières, à savoir les technologies alcaline et PEM (« proton exchange membrane », ou technologie à membrane échangeuse de protons) sont aujourd'hui matures et commercialisées. La consommation énergétique de ces électrolyseurs s'élève au mieux à environ 55 kWh/kg d'hydrogène, ce qui représente un rendement énergétique de l'ordre de 72%.

La troisième est l'électrolyse haute température (dite EHT), qui est en cours de développement. Les électrolyseurs haute température affichent une consommation énergétique de l'ordre de 45 kWh/kg d'hydrogène, soit un rendement énergétique de l'ordre de 87%.

Cette technologie, décrite par exemple dans le document « Can high temperature steam electrolysis function with geothermal heat? » par J. Sigurvinsson, C. Mansilla, P. Lovera et F.Werkoff, International Journal of Hydrogen Energy, propose d'électrolyser de l'eau sous forme de vapeur surchauffée à une température d'au moins 500°C, avantageusement de l'ordre de 800°C.

Cette technologie s'avère plus efficace que l'électrolyse de l'eau à température ambiante, parce qu'une partie de l'énergie nécessaire à la réaction peut être apportée par la chaleur (moins chère que l'électricité) et que le rendement énergétique est meilleur. Théoriquement, à une température de 2 500 °C, plus aucun apport de travail ne serait nécessaire car la thermolyse décomposerait spontanément l'eau en hydrogène et oxygène. Au vu des conditions opérationnelles, le meilleur compris reste atteint autour de 800°C.

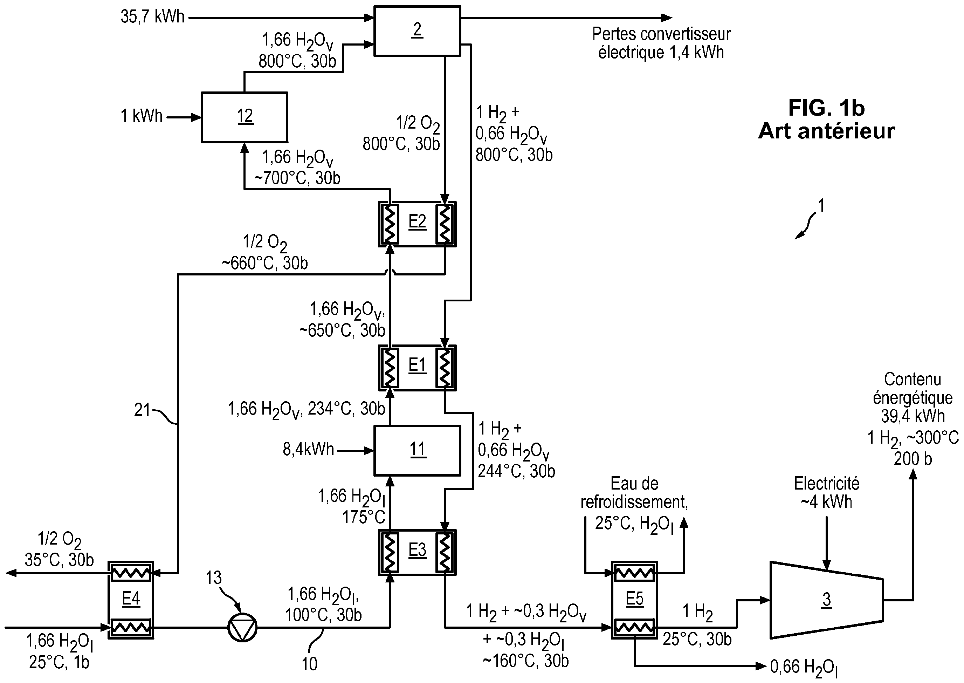

En référence à la **figure 1b,** on connait des systèmes 1 optimisés d'EHT offrant des rendements énergétiques de 80% (défini comme r=PCS/Qinv, où Qinv est l'énergie investie, c'est-à-dire consommée dans l'installation et PCS le pouvoir calorifique supérieur, c'est-à-dire le contenu énergétique de l'hydrogène obtenu, qui s'élève à 39,4 kWh/kg). Dans la suite de l'exposé, et afin de comparer entre eux les différentes installations, on considèrera un système 1 produisant 1 kg d'hydrogène à 200 bar.

La vapeur est ici produite dans un évaporateur 11 (apport d'énergie de 8,4 kWh), puis surchauffée à partir des gaz de sortie de l'électrolyseur 2 via les échangeurs E1 et E2 et d'un surchauffeur électrique 12 (apport d'énergie de 1 kWh). L'eau liquide est également préchauffée grâce aux gaz de sortie via les échangeurs E3 et E4. Le rendement élevé de l'électrolyseur fait que celui-ci n'a pas besoin d'un système de refroidissement intégré. On couple l'électrolyseur avec un compresseur mécanique 3 qui consomme 4 kWh d'énergie pour monter la pression à 200 bars.

Le rendement énergétique d'un tel dispositif est le suivant:

$$r = PCS / \ Qinv = 39,4 /(35.7+1+8.4+4)$$

r = 80%

Il serait souhaitable d'améliorer encore ce rendement pour accélérer la percée d'une utilisation industrielle et à grande échelle de l'hydrogène.

Rivera-Tinoco et al., International Journal of Green Energy, 7(1), 2010, 1-20 divulgue un système de production de dihydrogène comprenant un électrolyseur haute température et un compresseur de dihydrogène. Laurencelle et al., Journal of Alloys and Compounds, 475(1-2), 2009 , 810-816, Laurencelle et al., International Journal of Hydrogen Energy, 31(6), 2006, 762-768 et Vanhanen et al, 24(5), 1999, 441-448 divulguent des systèmes de production de dihydrogène comprenant un électrolyseur et un compresseur chimique de dihydrogène.

PRESENTATION DE L'INVENTION

L'invention propose de pallier ces inconvénients en proposant selon un premier aspect un système de production de dihydrogène comprenant :

- un électrolyseur haute température adapté pour mettre en oeuvre une électrolyse de vapeur d'eau à une température supérieure à 500°C et produire un mélange de vapeur d'eau et de dihydrogène ;
- un compresseur de dihydrogène ;
- un circuit principal d'eau et de dihydrogène sur lequel sont disposés successivement au moins un évaporateur, l'électrolyseur haute température, un condenseur et le compresseur, un premier échangeur mettant en échange thermique la vapeur d'eau issue de l'évaporateur et le mélange de vapeur d'eau et de dihydrogène issu l'électrolyseur haute température de sorte à surchauffer la vapeur d'eau issue de l'évaporateur ;

le système étant caractérisé en ce que

- le compresseur est un compresseur chimique alimenté en chaleur par échange thermique avec le condenseur ;
- le condenseur est disposé directement en sortie du premier échangeur.

Le dispositif selon l'invention est avantageusement complété par les caractéristiques suivantes, prises seules ou en une quelconque de leur combinaison techniquement possible :

- le premier échangeur est configuré de sorte que le mélange de vapeur d'eau et de dihydrogène présente en sortie une température d'au moins 200°C ;
- le système comprend en outre un circuit de dioxygène issu de l'électrolyseur haute température, sur lequel est disposé un deuxième échangeur mettant en en échange thermique la vapeur d'eau issue de l'évaporateur et le dioxygène issu l'électrolyseur haute température de sorte à surchauffer la vapeur d'eau issue de l'évaporateur ;
- le système comprend en outre un troisième échangeur mettant en échange thermique l'eau liquide du circuit principal en amont de l'évaporateur et le dioxygène issu du deuxième échangeur de sorte à préchauffer l'eau liquide entrant dans l'évaporateur ;
- le système comprend en outre un premier surchauffeur disposé sur le circuit principal en amont de l'électrolyseur haute température de sorte à surchauffer la vapeur d'eau issue de l'évaporateur ;
- le système comprend en outre un quatrième échangeur mettant en échange thermique l'eau liquide du circuit principal en amont de l'évaporateur et le dihydrogène sortant du condenseur de sorte à préchauffer l'eau liquide entrant dans l'évaporateur ;
- le quatrième échangeur est un deuxième condenseur ;
- le circuit principal reçoit les condensats issus du condenseur ;
- le circuit principal présente une branche pour la circulation des condensats issus du condenseur et un mélangeur pour le mélange de l'eau liquide issue du quatrième échangeur et desdits condensats ;
- le compresseur chimique est un compresseur à hydrures métalliques ;
- lesdits hydrures métalliques sont des hydrures de terres rares ;
- le compresseur chimique présente un unique réacteur ;
- un système de purification et/ou un système de séchage sont disposé sur le circuit principal entre le condenseur et le compresseur ;
- le système comprend un circuit thermique pour le transfert de chaleur du condenseur au compresseur ;
- le fluide du circuit thermique présente une température d'au moins 120°C en entrée du compresseur ;
- le circuit thermique présente un deuxième surchauffeur pour surchauffer le fluide du circuit en sortie du condenseur.

Selon un deuxième aspect, l'invention concerne un procédé de production de dihydrogène caractérisé en ce qu'il comprend des étapes de :

- Evaporation d'eau liquide d'un circuit principal d'eau et de dihydrogène dans un évaporateur ;
- Surchauffe de la vapeur d'eau dans au moins un premier échangeur à une température supérieure à 500°C ;
- Electrolyse de la vapeur d'eau dans un électrolyseur haute température de sorte à produire un mélange de vapeur d'eau et de dihydrogène ;
- Refroidissement dudit mélange de vapeur d'eau et de dihydrogène par échange thermique via le premier échangeur ;
- Condensation de la vapeur d'eau dudit mélange directement en sortie du premier échangeur dans un condenseur ;
- Compression du dihydrogène par un compresseur chimique, alimenté en chaleur par échange thermique avec le condenseur.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1a précédemment décrite est un schéma d'une pile à hydrogène connue ;
- la figure 1b précédemment décrite est un schéma d'un système de production de dihydrogène connu ;
- les figures 2a et 2b sont des schémas de deux modes de réalisation particulièrement préférés d'un système de production de dihydrogène selon l'invention ;
- la figure 3 est un schéma d'un compresseur chimique.

Sur les différentes figures, les éléments similaires portent les mêmes références numériques, et les valeurs de températures et de pression indiquées sont uniquement à titre d'exemple non limitatif.

DESCRIPTION DETAILLEE

*Architecture générale*

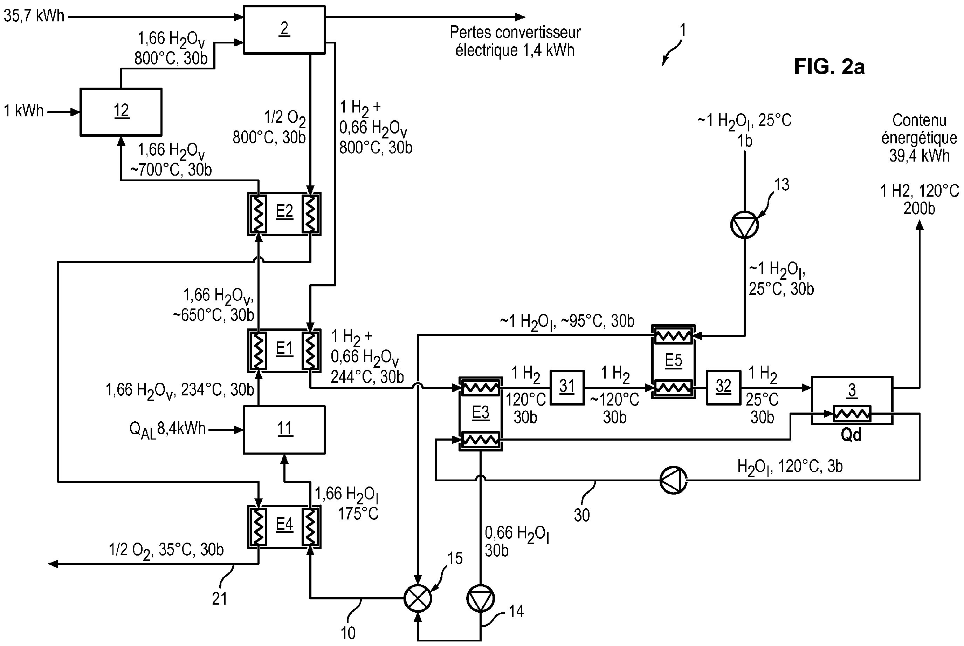

La **figure 2a** représente un premier mode de réalisation préféré du présent système 1 de production de dihydrogène.

Ce système comprend deux composants principaux, à savoir un électrolyseur haute température 2 et un compresseur 3 de dihydrogène gazeux.

Par électrolyseur haute température 2, on entend un électrolyseur adapté pour mettre en oeuvre une électrolyse de vapeur d'eau à une température supérieure à 500°C (préférentiellement environ 800°C) et produire un mélange de vapeur d'eau et de dihydrogène. Plus précisément, une cathode poreuse reçoit la vapeur d'eau et en convertit une partie en dihydrogène. Du dioxygène pur se forme au niveau d'une anode poreuse. En référence à la figure 2a, pour 1.66 mole de vapeur d'eau en entrée, 1 mole de dihydrogène est produite (0.66 mole de vapeur d'eau est donc relâchée telle quelle), et 0.5 mole de dioxygène est produite.

De tels électrolyseurs haute température (dits « EHT ») sont connus, et se ne doivent pas être confondus avec des électrolyseurs standard qui consomment de l'eau liquide à des températures de l'ordre de la température ambiante.

Le système 1 comprend en outre un circuit principal 10 d'eau et de dihydrogène sur lequel sont disposés successivement au moins un évaporateur 11, l'électrolyseur haute température 2, un condenseur E3 et le compresseur 3.

Plus précisément ce circuit principal 10 est initialement un circuit d'eau liquide jusqu'à l'évaporateur 11 (qui vaporise cette eau liquide), puis un circuit de vapeur d'eau jusqu'à l'EHT 2 (qui décompose une fraction de la vapeur d'eau en dihydrogène et dioxygène), puis un circuit de vapeur et de dihydrogène jusqu'au condenseur E3 (qui condense la vapeur d'eau restante en eau liquide), puis un circuit de dihydrogène jusqu'au compresseur 3. La pression de fluide dans le circuit principal 10 est typiquement de plusieurs dizaines de bar, avantageusement environ 30 bar, grâce à une pompe 13 disposée en amont de l'évaporateur 11 de sorte à comprimer l'eau liquide. La consommation d'une telle pompe est négligeable devant les autres dépenses énergétiques du système 1.

Comme l'on verra, de nombreux échangeurs ou autres équipements thermiques sont disposés le long du circuit principal 10, en particulier pour surchauffer la vapeur d'eau entre l'évaporateur 11 et l'EHT 2 de sorte à atteindre les hauts niveaux de température requis.

Le système 1 comprend en outre un circuit de dioxygène 21 issu de l'EHT 2 (comme expliqué, le dioxygène est généré au niveau de l'anode). Ce circuit est indépendant du circuit principal 10, mais comme l'on verra il est avantageusement en échange thermique avec ce dernier pour récupérer la chaleur de ce dioxygène.

Une première particularité du présent système est que le compresseur 3 est un compresseur chimique.

*Compresseur chimique*

La compression de l'hydrogène est aujourd'hui quasiment exclusivement réalisée de manière mécanique. Il s'agit principalement de compresseurs à membrane ou de compresseurs à pistons alimentés par de l'air comprimé. On connait également la compression ionique, qui remplace les pistons mécaniques par des liquides ioniques, dans lesquels certains gaz ne sont pas solubles.

A titre indicatif, on peut considérer que pour des compresseurs à membrane, la consommation énergétique liée à la compression de l'hydrogène issue d'un électrolyseur jusqu'à une pression de 200 bar s'élève à environ 4 kWh/kg.

Outre leur consommation énergétique élevée, les compresseurs mécaniques présentent d'autres inconvénients : ils nécessitent beaucoup de maintenance du fait de l'usure des pièces mobiles et des joints, et ils occasionnent des nuisances sonores, qui peuvent représenter un problème en milieu urbain.

Par compression chimique, on entend une technique d'augmentation de la pression qui soit purement physico-chimique et non mécanique, i.e. sans pièce mobile. De façon générale, un compresseur chimique change d'état (au sens large) le dihydrogène, puis le recycle à un niveau de pression supérieur (sous l'effet de la chaleur).

De façon préférée, la technique dite de compression chimique utilise le phénomène de l'adsorption pour augmenter la pression. L'absorption est un processus physique et chimique dans lequel des atomes, molécules, ou ions entrent dans une phase gazeuse, liquide ou solide, ici typiquement des composés métalliques en particulier du type terres rares (ou lanthanides) qui deviennent des hydrures lorsque liés à l'hydrogène. La désorption est le phénomène inverse, par lequel les molécules adsorbées se libèrent, en particulier sous l'action de l'élévation de la température. Les hydrures métalliques retrouvent alors leur état de métal normal. De tels compresseurs chimiques sont ainsi nommés par convention « compresseurs à hydrures métalliques », bien que ces métaux ne soient pas en permanence sous leur forme d'hydrure.

Alternativement, on connait des compresseurs chimiques basé sur le principe de la pile à combustible. Par exemple, avec une technologie PEM, le dihydrogène est dissociés en protons (grâce à un catalyseur tel que le platine) franchissant une membrane poreuse aux ions mais étanche aux gaz, de l'autre côté de laquelle ils sont recombinés avec leur électrons d'origine en dihydrogène à une pression supérieure. Un tel compresseur est nommé « compresseur électrochimique ».

Dans la suite de la présente description, on prendra l'exemple d'un compresseur chimique de type à hydrures métallique, mais l'homme du métier saura transposer l'invention au cas de tout compresseur chimique.

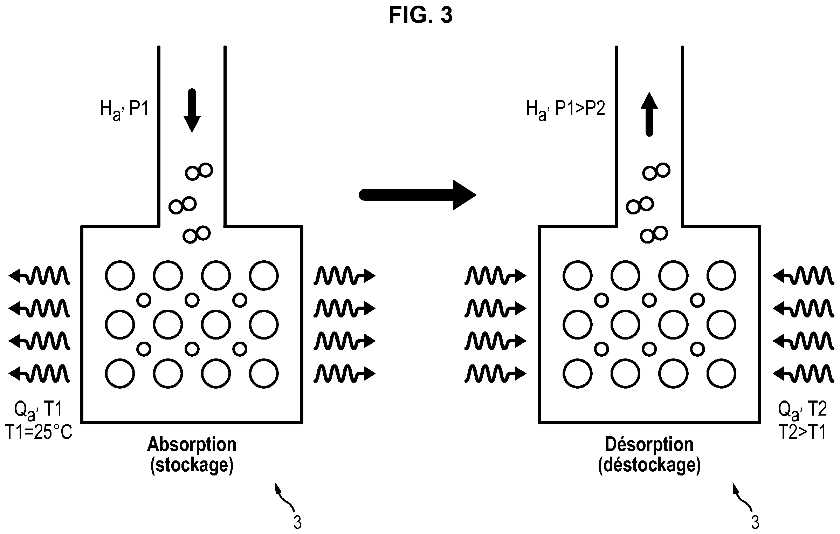

La **figure 3** représente la cinétique d'un réacteur d'un compresseur chimique 3 pour l'adsorption/désorption de l'hydrogène par des composés métalliques, par exemple (mais pas exclusivement) à base de terres rares, par exemple du lanthane.

Dans un premier temps (vue de gauche de la figure 3) du dihydrogène est injecté dans le réacteur 6 à une pression P1 et à une température préférentiellement basse. C'est la phase dite d'absorption. La réaction d'absorption est exothermique et dégage une quantité de chaleur $Q_a$ à une température T1, préférentiellement basse, par exemple de l'ordre de 25°C.

Dans un second temps (vue de droite de la figure 3) un apport de chaleur $Q_d$ à température T2>T1, va enclencher le phénomène inverse de désorption, libérant les molécules d'hydrogène à pression P2>P1. On a amplifié la pression initiale, comme l'aurait fait un compresseur mécanique, mais par la voie « chimique ».

La température T2 commande la pression P2, la quantité de chaleur $Q_d$ commande la quantité de matière de dihydrogène libérée.

L'énergie libérée lors de l'absorption est égale à celle nécessaire pour la désorption. Toutefois, à cause du bas niveau de température de la chaleur d'absorption, celle-ci est perdue. La consommation énergétique associée à la compression est donc égale à la chaleur de désorption. Celle-ci dépend du type d'hydrures métalliques. Des chaleurs de désorption comprises entre 2 et plus de 4 kWh/kg d'hydrogène sont rapportées dans la littérature. On fera dans la suite de la présente description l'hypothèse d'un hydrure disposant d'une chaleur de désorption de l'ordre de 2,5 kWh/kg.

Les compresseurs chimiques de type à hydrures métalliques sont par exemple décrits dans la publication « Metal hydride hydrogen compressors: A review » par M.V. Lototskyy, V.A. Yartys, B.G. Pollet et R.C. Bowman Jr, International Journal of Hydrogen Energy.

Il a ainsi été proposé dans l'art antérieur de coupler un électrolyseur basse température classique à un compresseur à hydrures multi-étagé (typiquement tri-étagé). En d'autres termes, le dihydrogène issu de l'électrolyseur passe dans plusieurs réacteurs mis en série de sorte à subir une multiple remontée en pression : la pression de sortie de l'étage i égale celle de la pression d'entrée de l'étage i+1, qui sera amplifiée par le réacteur i+1. Ainsi on obtient une pression délivrée de 200 bar, en sortie du dernier réacteur

Ici les pertes fatales de chaleur de l'électrolyseur, de l'ordre de 10 kWh, sont valorisée et investie pour apporter les quantités de chaleur de désorption $Q_{d(i)}$ à des températures de l'ordre de 80°C, aux réacteurs mis en série.

Le rendement énergétique d'un tel dispositif est le suivant:

$$r = PCS / Qinv = 39,4 / 55$$

r = 72%

Bien que la consommation d'un compresseur chimique à 3 étage soit élevée (3 * 2,5 kWh = 7,5 kWh), on améliore le rendement de 5 points par rapport à un dispositif équivalent avec compresseur mécanique, car le compresseur n'est pas alimenté par de l'électricité, mais par de la chaleur fatale produite par l'électrolyseur.

*Condenseur*

Le présent système 1 combine un électrolyseur à haute température avec un compresseur chimique.

La difficulté est qu'il n'est pas possible de simplement récupérer les pertes fatales de chaleur de l'électrolyseur, puisqu'elles sont contenues dans la chaleur du mélange de vapeur et de de dihydrogène issu de l'EHT 2.

Le présent système 1 résout cette difficulté par l'utilisation astucieuse de deux échangeurs E1, E3.

Le premier échangeur E1 est un échangeur de surchauffe connu disposé sur le circuit principal 10 (à la fois en amont et en aval de l'EHT 2). Plus précisément il met en échange thermique la vapeur d'eau issue de l'évaporateur 11 et le mélange de vapeur d'eau et de dihydrogène issu l'électrolyseur haute température 2 de sorte à surchauffer la vapeur d'eau issue de l'évaporateur 11. En référence à la figure 2a, le premier échangeur E1 permet typiquement de remonter de 234 à 650°C la vapeur surchauffée à électrolyser, tout en descendant de 800 à 244°C le mélange de vapeur et de dihydrogène issu de l'EHT 2.

On note qu'est avantageusement disposé sur le circuit 10 un deuxième échangeur E2 de surchauffe, cette fois mettant en en échange thermique la vapeur d'eau issue de l'évaporateur 11 (typiquement issue du premier échangeur E1) et le dioxygène issu l'électrolyseur haute température 2 de sorte à surchauffer la vapeur d'eau issue de l'évaporateur 11. En référence à la figure 2a, le deuxième échangeur E2 permet typiquement de remonter de 650 à 700°C la vapeur surchauffée à électrolyser, tout en descendant de 800 à 660°C le dioxygène issu de l'EHT 2. On note que le premier et le deuxième échangeur E1, E2 sont permutables, on comprendra qu'ils ont une action conjointe permettant de surchauffer la vapeur issue de l'évaporateur 11, avantageusement de plus de 550°C.

Le système peut également comprendre un premier surchauffeur 12 (typiquement un équipement électrique ou à bruleur) disposé sur le circuit principal 10 en amont de l'électrolyseur haute température 2 de sorte lui-aussi à surchauffer la vapeur d'eau issue de l'évaporateur 11. Il peut être en aval des premier et deuxième échangeurs E1, E2 (i.e. il surchauffe la vapeur issue du premier échangeur E1 et/ou du deuxième échangeur E2) de sorte à permettre d'atteindre le plus haut niveau de température possible en entrée de l'EHT 2, typiquement 800°C. Comme dans l'art antérieur, il consomme de l'ordre de 1kWh (par kilogramme de dihydrogène produit).

L'échangeur E3 évoqué précédemment est un condenseur. Il a pour rôle de condenser la fraction de vapeur dans le mélange issu de l'EHT 2, de sorte à isoler le dihydrogène. Mais là où l'art antérieur proposait d'utiliser la chaleur produite par la condensation pour préchauffer l'eau liquide du circuit 10 avant son introduction dans l'évaporateur 11, le présent système l'utilise pour alimenter le compresseur chimique 3.

L'invention utilise avantageusement une propriété intrinsèque aux EHT où le fluide de fonctionnement dans l'électrolyseur est de la vapeur et non de l'eau. Pour des raisons d'équilibre de réaction et de transferts de masse, les électrolyseurs à haute température ne peuvent pas convertir l'ensemble de la vapeur en hydrogène. Comme expliqué, le taux de conversion s'élève typiquement à 60%. Il reste donc une importante quantité résiduelle de vapeur surchauffée mêlée à l'hydrogène, beaucoup plus importante que dans le cas de l'utilisation d'un électrolyseur conventionnel à température plus basse (80°C environ).

En outre, l'énergie contenue dans cette vapeur résiduelle est habituellement non utilisable en intégralité. En effet, la seule consommation d'énergie qu'elle pourrait permettre de remplacer serait $Q_{AL}$ (i.e. la quantité d'énergie nécessaire au fonctionnement de l'évaporateur 11 dans notre exemple environ 8.4 kWh), mais cette dernière doit être apportée à la température de vaporisation à 30 bar, soit 234°C, tandis que la vapeur résiduelle contenue dans l'hydrogène condense à plus faible température, du fait de sa pression partielle inférieure à 30 bar. Ainsi, la vapeur résiduelle est normalement inutilisable dans l'électrolyseur haute température et donc en partie gaspillée. Ainsi, dans l'art antérieur de la figure 1b, le condenseur E3 ne permet de condenser que la moitié de la vapeur d'eau (diminution de température de 244 à 160°C), un échangeur E5 étant utilisé comme second condenseur pour condenser la vapeur d'eau résiduelle et dissiper la chaleur associée.

C'est dans cette vapeur d'eau résiduelle que le présent système 1 puise la quantité de chaleur de désorption et non dans les pertes de chaleur de l'EHT 2 quasi inexistantes ici, contrairement à ce qu'offrent les électrolyseurs standards.

Pour cela, le condenseur E3 est disposé directement en sortie du premier échangeur E1, de sorte à présenter un niveau d'énergie suffisant. De façon préférée le premier échangeur E1 est configuré de sorte que le mélange de vapeur d'eau et de dihydrogène présente en sortie (et donc en entrée du condenseur E3) une température d'au moins 200°C, dans l'exemple 244°C.

Par « disposé directement en sortie », on entend qu'il n'y a pas d'équipement thermique sur le circuit principal 10 entre le premier échangeur E1 et le condenseur E3 qui soit susceptible d'abaisser la température du mélange. En d'autres termes, à des pertes thermiques près dues aux canalisations, la température du mélange en sortie du premier échangeur E1 est sensiblement égale à sa température en entrée du condenseur E3.

Un circuit thermique 30 (contenant typiquement un fluide caloporteur liquide ne changeant pas de phase, par exemple de l'eau liquide à 3 bar ou une huile thermique) est préférentiellement utilisé pour transférer la chaleur récupérée (en l'espèce à la fois la chaleur sensible de la vapeur et sa chaleur latente, c'est-à-dire l'enthalpie de changement de phase) au réacteur du compresseur chimique. Le fluide du circuit 30 présente avantageusement une température d'au moins 120°C en sortie du condenseur E3.

Le débit d'eau dans le circuit 30 doit être le plus élevé possible pour que la différence de température entre l'entrée et la sortie de l'échangeur E3 (pour le fluide caloporteur du circuit 30) soit aussi faible que possible, afin de garantir une température homogène et proche de 120°C dans le compresseur 3. A titre d'exemple, un débit de 7 L/min d'eau liquide permet d'évacuer les 2.5 kW requis de chaleur échangée pour un delta T de 5°C entre l'entrée et la sortie.

De façon préférée, le compresseur chimique 3 ne comprend qu'un seul réacteur, contrairement à l'art antérieur où il en comprenait généralement trois. Cela est permis par le haut niveau de température fourni via le circuit 4, puisque comme expliqué la température de désorption commande la pression de sortie, et la température de 120°C suffit à remonter d'un coup la pression du dihydrogène de 30 bar à 200 bar. Le présent système 1 est donc bien plus simple et moins couteux (puisqu'un seul étage et donc par exemple moins d'hydrures métalliques/moins de platine sont nécessaires) que les compresseurs chimiques connus.

En outre, par rapport à un système mettant en oeuvre un compresseur mécanique, la solution présente les avantages secondaires suivants : compacité, absence de bruit, coûts de maintenance probablement plus faibles, car pas de pièces mobiles.

En sortie du condenseur E3, les traces d'oxygène qui peuvent subsister sont avantageusement éliminées par un purificateur 31, qui peut être par exemple un système d'oxydation catalytique, puis le flux de dihydrogène est refroidi dans un quatrième échangeur E5 grâce à de l'eau alimentaire qui s'échauffe pour être conduite par le circuit principal 10 en entrée de l'évaporateur 11 via un troisième échangeur E4, le quatrième échangeur E5 préchauffant l'eau liquide à près de 100°C. Cette boucle de recirculation fait économiseur une quantité substantielle d'énergie à l'évaporateur 11, en l'espèce la même que dans l'art antérieur, tout en gardant la possibilité d'utiliser quasi-intégralement la chaleur latente de la vapeur d'eau.

On note qu'en sortie du condenseur E3, il peut rester environ 10% de la vapeur qui n'est pas condensée, soit 1,2 bar de pression partielle. Cette vapeur « ultime » est le cas échéant condensée dans l'échangeur E5, qui est alors un deuxième condenseur comme dans l'état de la technique de la figure 1b. Par rapport à celui-ci, le gain est très net puisque l'on réutilise plus de 90% de la vapeur résiduelle, alors qu'environ la moitié de cette vapeur était alors perdue.

Le troisième échangeur E4 met en échange thermique l'eau liquide du circuit principal 10 en amont de l'évaporateur 11 et le dioxygène issu du deuxième échangeur E2 de sorte à préchauffer l'eau liquide entrant dans l'évaporateur 11. En d'autres termes le troisième échangeur E4 permet d'utiliser la grande majorité de la chaleur sensible du dioxygène du circuit 21, qui sort à 115°C.

De même, il est de façon particulièrement avantageuse tiré parti de la chaleur des condensats (typiquement 120°C comme le fluide du circuit 31) de la vapeur au niveau du condenseur E3 : ces derniers sont injectés via une branche 14 dans le circuit principal 10 en amont de l'évaporateur 11. Ils sont mélangés à l'eau liquide sortant du quatrième échangeur E5 au niveau d'un mélangeur 15. Le mélange produit de l'eau liquide à environ 105°C avant même son entrée dans le troisième échangeur E4. Sans cela, la consommation d'énergie supplémentaire dans l'évaporateur 11 serait de l'ordre de 1.4 kWh.

Enfin, les traces résiduelles d'eau (liquide) dans le flux de dihydrogène en sortie du cinquième échangeur E5 en sortie de l'échangeur sont avantageusement séparées de l'hydrogène via un système de séchage 32 avant d'entrer dans le compresseur 3. Ce système de séchage est nécessaire dans tous les systèmes dédiés aux stations-service à hydrogène, car le véhicule nécessite de l'hydrogène très pur.

Les systèmes de purification 31 et de séchage 32, permettent par ailleurs de préserver les qualités intrinsèques des poudres hydrures du compresseur et éviter leur oxydation et détérioration irréversible.

Le quatrième échangeur E5 permet en outre d'éviter d'installer un système de refroidissement dédié du dihydrogène qui étant jusque-là nécessaire.

Avec $Q_{AL} \sim 8.4$ kWh, le rendement d'un tel système complètement optimisé est le suivant:

$$r = PCS / Qinv = 39,4 / (35.7 + 8.4 + 1)$$

r = 87%, soit près de sept points de plus que la solution la plus compétitive utilisant un électrolyseur haute température selon le mode de réalisation de la figure 1b, et douze points de plus que la solution la plus compétitive utilisant des compresseurs à hydrures multi-étagés.

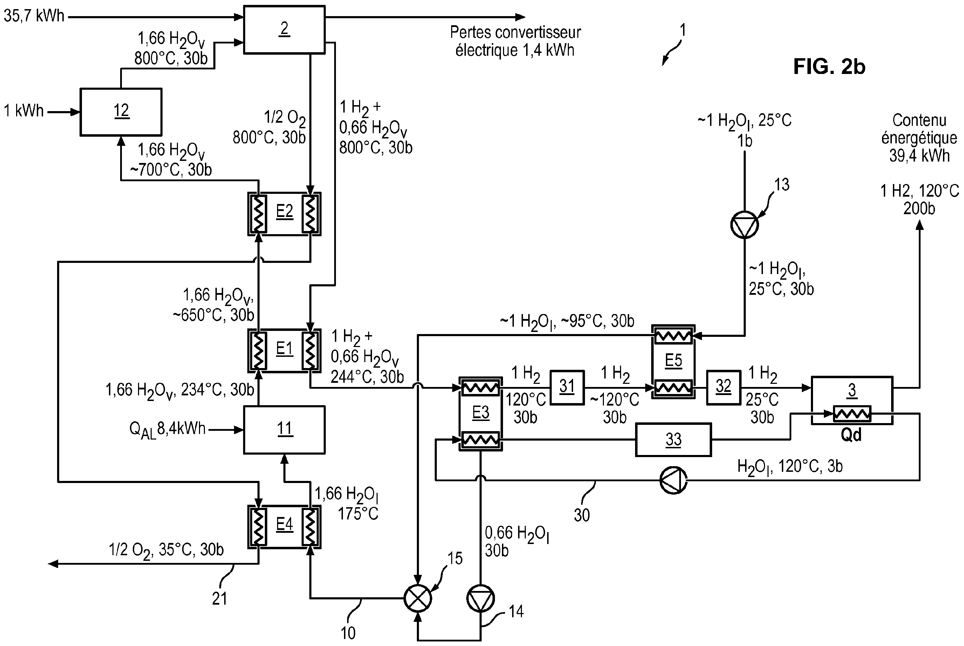

La **figure 2b** représente un mode de réalisation alternatif du système 1, dans lequel un deuxième surchauffeur 33 (du même type que le premier surchauffeur 12) est disposé sur le circuit thermique 30 entre l'échangeur E3 et le compresseur 3.

Ce surchauffeur 33 permet la mise en oeuvre d'un mode de fonctionnement dit « dégradé » dans lequel la chaleur apportée par la vapeur résiduelle contenue dans l'hydrogène ne suffit pas à fournir la chaleur de désorption $Q_d$. Ce mode dégradé peut intervenir si l'un ou une combinaison des cas suivants se produit:

- Le taux de conversion est supérieur à 60% dans l'électrolyseur haute température 2 ;
- Les canalisations sont mal isolées et on ne peut pas récupérer la totalité du gisement thermique ;

- Les hydrures sélectionnés pour le compresseur 3 ont une chaleur d'absorption/désorption supérieure au gisement thermique de la vapeur résiduelle.

Le deuxième surchauffeur 33 apporte le complément de chaleur nécessaire à la réaction de désorption. La solution reste ainsi compétitive par rapport à une solution concurrente tant que la quantité d'électricité consommée dans le surchauffeur 33 est inférieure à celle qu'aurait consommé un compresseur mécanique remplissant le même service.

On peut même choisir de mettre en oeuvre la solution proposée dans le cas où la consommation électrique du deuxième surchauffeur 33 serait élevée, à condition d'apporter une valeur supplémentaire précieuse pour l'utilisateur, notamment :

- Des coûts d'investissement moindre que ceux d'un compresseur mécanique ;
- Une absence de nuisance sonore ;
- Une meilleure compacité ;
- Des coûts de maintenance réduits.

*Procédé*

Selon un deuxième aspect, l'invention concerne également un procédé de production de dihydrogène mis en oeuvre par le système 1 selon le premier aspect de l'invention.

Ce procédé comprend des étapes de :

- Evaporation d'eau liquide d'un circuit principal 10 d'eau et de dihydrogène dans un évaporateur 11 (l'eau liquide étant le cas échéant préchauffée via un troisième échangeur E4 et/ou un quatrième échangeur E5) ;
- Surchauffe de la vapeur d'eau dans au moins un premier échangeur E1 (et avantageusement un deuxième échangeur E2 et/ou un premier surchauffeur 12) à une température supérieure à 500°C, avantageusement environ 800°C ;
- Electrolyse de la vapeur d'eau dans un électrolyseur haute température 2 de sorte à produire un mélange de vapeur d'eau et de dihydrogène ;
- Refroidissement dudit mélange de vapeur d'eau et de dihydrogène par échange thermique via le premier échangeur E1 ;
- Condensation de la vapeur d'eau dudit mélange directement en sortie du premier échangeur dans un condenseur E3 (les condensats étant avantageusement injectés dans le circuit principal 10 en amont de l'évaporateur 11) ;
- Compression du dihydrogène par un compresseur chimique 3 (préférentiellement mono-réacteur), alimenté en chaleur par échange thermique avec le condenseur E3 (avantageusement via un circuit thermique 30 pour la circulation d'un fluide thermique sans changement de phase, le condenseur E1 chauffant en particulier le fluide thermique à plus de 120°C pour alimenter le compresseur chimique 3).

**Revendications**

1. Système (1) de production de dihydrogène comprenant :

   - un électrolyseur haute température (2) adapté pour mettre en oeuvre une électrolyse de vapeur d'eau à une température supérieure à 500°C et produire un mélange de vapeur d'eau et de dihydrogène ;
   - un compresseur (3) de dihydrogène ;
   - un circuit principal (10) d'eau et de dihydrogène sur lequel sont disposés successivement au moins un évaporateur (11), l'électrolyseur haute température (2), un condenseur (E3) et le compresseur (3), un premier échangeur (E1) mettant en échange thermique la vapeur d'eau issue de l'évaporateur (11) et le mélange de vapeur d'eau et de dihydrogène issu l'électrolyseur haute température (2) de sorte à surchauffer la vapeur d'eau issue de l'évaporateur (11) ;

   le système étant **caractérisé en ce que**

   - le compresseur (3) est un compresseur chimique alimenté en chaleur par échange thermique avec le condenseur (E3) ;
   - le condenseur (E3) est disposé directement en sortie du premier échangeur(E1).

2. Système selon la revendication 1, dans lequel le premier échangeur (E1) est configuré de sorte que le mélange de vapeur d'eau et de dihydrogène présente en sortie une température d'au moins 200°C.

3. Système selon l'une des revendications 1 et 2, comprenant en outre un circuit de dioxygène (21) issu de l'électrolyseur haute température (2), sur lequel est disposé un deuxième échangeur (E2) mettant en échange thermique la vapeur d'eau issue de l'évaporateur (11) et le dioxygène issu l'électrolyseur haute température (2) de sorte à surchauffer la vapeur d'eau issue de l'évaporateur (11).

4. Système selon la revendication 3, comprenant en outre un troisième échangeur (E4) mettant en échange thermique l'eau liquide du circuit principal (10) en amont de l'évaporateur (11) et le dioxygène issu du deuxième échangeur (E2) de sorte à préchauffer l'eau liquide entrant dans l'évaporateur (11).

5. Système selon l'une des revendications 1 à 4, comprenant en outre un premier surchauffeur (12) disposé sur le circuit principal (10) en amont de l'électrolyseur haute température (2) de sorte à surchauffer la vapeur d'eau issue de l'évaporateur (11).

6. Système selon l'une des revendications 1 à 5, comprenant en outre un quatrième échangeur (E5) mettant en échange thermique l'eau liquide du circuit principal (10) en amont de l'évaporateur (11) et le dihydrogène sortant du condenseur (E3) de sorte à préchauffer l'eau liquide entrant dans l'évaporateur (11).

7. Système selon la revendication 6, dans lequel le quatrième échangeur (E5) est un condenseur.

8. Système selon l'une des revendications 1 à 7, dans lequel le circuit principal (10) reçoit les condensats issus du condenseur (E3).

9. Système selon l'une des revendications 6 et 7 et la revendication 8 en combinaison, dans lequel le circuit principal (10) présente une branche (14) pour la circulation des condensats issus du condenseur (E3) et un mélangeur (15) pour le mélange de l'eau liquide issue du quatrième échangeur (E5) et desdits condensats.

10. Système selon l'une des revendications 1 à 9, dans lequel le compresseur chimique (3) est un compresseur à hydrures métalliques, en particulier des hydrures de terres rares.

11. Système selon la revendication 10, dans lequel le compresseur chimique (3) présente un unique réacteur.

12. Système selon l'une des revendications 1 à 11, dans lequel un système de purification (31) et/ou un système de séchage (32) sont disposés sur le circuit principal (10) entre le condenseur (E3) et le compresseur (3).

13. Système selon l'une des revendications 1 à 12, comprenant un circuit thermique (30) pour le transfert de chaleur du condenseur (E3) au compresseur (3), le fluide du circuit thermique (30) présentant préférentiellement une température d'au moins 120°C en entrée du compresseur (3).

14. Système selon la revendication 13, dans lequel le circuit thermique (30) présente un deuxième surchauffeur (33) pour surchauffer le fluide du circuit (30) en sortie du condenseur (E3).

15. Procédé de production de dihydrogène **caractérisé en ce qu'**il comprend des étapes de :

- Evaporation d'eau liquide d'un circuit principal (10) d'eau et de dihydrogène dans un évaporateur (11) ;

- Surchauffe de la vapeur d'eau dans au moins un premier échangeur (E1) à une température supérieure à 500°C ;

- Electrolyse de la vapeur d'eau dans un électrolyseur haute température (2) de sorte à produire un mélange de vapeur d'eau et de dihydrogène ;

- Refroidissement dudit mélange de vapeur d'eau et de dihydrogène par échange thermique via le premier échangeur (E1);

- Condensation de la vapeur d'eau dudit mélange directement en sortie du premier échangeur dans un condenseur (E3) ;

- Compression du dihydrogène par un compresseur chimique (3), alimenté en chaleur par échange thermique avec le condenseur (E3).

**Patentansprüche**

1. System (1) zur Produktion von Dihydrogen, umfassend:

- ein Hochtemperatur-Elektrolysegerät (2), das geeignet ist, um eine Wasserdampf-Elektrolyse bei einer Temperatur von mehr als 500°C umzusetzen und eine Mischung aus Wasserdampf und Dihydrogen zu produzieren;

- einen Dihydrogen-Kompressor (3);

- einen Haupt-Wasser- und Dihydrogenkreislauf (10), auf dem sukzessive wenigstens ein Verdampfer (11), das Hochtemperatur-Elektrolysegerät (2), ein Kondensator (E3) und der Kompressor (3) angeordnet sind, wobei ein erster Austauscher (E1) den aus dem Verdampfer (11) stammenden Wasserdampf und die Mischung aus Wasserdampf und aus dem Hochtemperatur-Elektroylsegerät (2) stammendes Dihydrogn derart zum Wärmeaustausch bringt, dass der aus dem Verdampfer (11) stammende Wasserdampf überhitzt ist;

wobei das System **dadurch gekennzeichnet ist, dass**

- der Kompressor (3) ein chemischer Kompressor ist, der vom Wärmetauscher mit dem Kondensator (E3) mit Wärme versorgt wird;

- der Kondensator (E3) direkt am Ausgang des ersten Austauschers (E1) angeordnet ist.

2. System gemäß Anspruch 1, bei dem der erste Austauscher (E1) derart konfiguriert ist, dass die Mischung aus Wasserdampf und Dihydrogen am Ausgang eine Temperatur von wenigstens 200° C aufweist.

**3.** System gemäß einem der Ansprüche 1 und 2, umfassend darüber hinaus einen Disauerstoff-Kreislauf (21), der aus dem Hochdruck-Elektrolysegerät (2) stammt, auf dem ein zweiter Austauscher (E2) angeordnet ist, der den aus dem Elektrolysegerät ((11) stammenden Wasserdampf und den aus dem Hochdruck-Elektrolysegerät (2) stammenden Disauerstoff derart in Wärmeaustausch bringt, dass der aus dem Verdampfer (11) stammende Wasserdampf überhitzt ist.

**4.** System gemäß Anspruch 3, umfassend darüber hinaus einen dritten Austauscher (E4), der das flüssige Wasser des dem Verdampfer (11) vorgeschalteten Hauptkreislaufs (10) und den aus dem zweiten Austauscher (E2) stammenden Disauerstoff derart in Wärmeaustausch bringt, dass das in den Verdampfer (11) eintretende flüssige Wasser vorerhitzt wird.

**5.** System gemäß einem der Ansprüche 1 bis 4, umfassend darüber hinaus einen ersten Überhitzer (12), der auf dem dem Hochtemperatur-Elektrolysegerät (2) vorgeschalteten Hauptkreislauf (10) derart angeordnet ist, dass der aus dem Verdampfer (11) stammende Wasserdampf überhitzt ist.

**6.** System gemäß einem der Ansprüche 1 bis 5, umfassend darüber hinaus einen vierten Austauscher (E5), der das flüssige Wasser des dem Verdampfer (11) vorgeschalteten Hauptkreislaufs (10) und das aus dem Kondensator (E3) austretende Dihydrogen derart in Wärmeaustausch bringt, dass das in den Verdampfer (11) eintretende flüssige Wasser vorerhitzt ist.

**7.** System gemäß Anspruch 6, bei dem der vierte Austauscher (E5) ein Kondensator ist.

**8.** System gemäß einem der Ansprüche 1 bis 7, bei dem der Hauptkreislauf (10) die aus dem Kondensator (E3) stammenden Kondensate empfängt.

**9.** System gemäß einem der Ansprüche 6 und 7 und Anspruch 8 in Kombination, bei dem der Hauptkreislauf (10) einen Zweig (4) für den Umlauf der aus dem Kondensator (E3) stammenden Kondensate und einen Mischer (15) für die Mischung des aus dem vierten Austauscher (E5) stammenden Wassers und der genannten Kondensate aufweist.

**10.** System gemäß einem der Ansprüche 1 bis 9, bei dem der chemische Kompressor (3) ein Metallhydrid-Kompressor, insbesondere mit Hydriden aus seltenen Erden, ist.

**11.** System gemäß Anspruch 10, bei dem der chemische Kompressor (3) einen einzelnen Reaktor aufweist.

**12.** System gemäß einem der Ansprüche 1 bis 11, bei dem ein Reinigungssystem (31) und / oder ein Trocknungssystem (32) auf dem Haupt-Kreislauf (10) zwischen dem Kondensator (E3) und dem Kompressor (3) angeordnet ist / sind.

**13.** System gemäß einem der Ansprüche 1 bis 12, umfassend einen thermischen Schaltkreis (30) für den Wärmetransfer vom Kondensator (E3) zum Kompressor (3), wobei das Medium des Wärme-Kreislaufs (30) bevorzugt eine Temperatur von wenigstens 120° C am Eingang des Kompressors (3) aufweist.

**14.** System gemäß Anspruch 13, bei dem der Wärme-Kreislauf (30) einen zweiten Überhitzer (33) zum Überhitzen des Mediums des Kreislaufs (30) am Ausgang des Kondensators (E3) aufweist.

**15.** Verfahren zur Produktion von Dihydrogen, **dadurch gekennzeichnet, dass** es die Schritte umfasst:

- Verdampfen von flüssigem Wasser eines Haupt-Wasser- und Dihydrogenkreislaufs (10) in einem Verdampfer (11);
- Überhitzen des Wasserdampfs in wenigstens einem ersten Austauscher (E1) auf eine Temperatur von mehr als 500° C;
- Elektrolyse des Wasserdampfes in einem Hochtemperatur-Elektrolysegerät (2) derart, dass eine Mischung aus Wasserdampf und Dihydrogen produziert wird;
- Abkühlen der genannten Mischung aus Wasserdampf und Dihydrogen per Wärmetausch über den ersten Austauscher (E1);
- Kondensation des Wasserdampfes der genannten Mischung direkt am Ausgang des ersten Austauschers in einem Kondensator (E3);
- Kompression des Dihydrogens durch einen chemischen Kompressor (3), der per Wärmetausch mit dem Kondensator (E3) mit Wärme versorgt wird.

**Claims**

**1.** A dihydrogen production system (1) comprising:

- a high temperature electrolyser (2) adapted to implement steam electrolysis at a temperature higher than 500 °C and produce a steam and dihydrogen mixture;
- a dihydrogen compressor (3);
- a main water and dihydrogen circuit (10) on which at least one evaporator (11), the high temperature electrolyser (2), a condenser (E3) and the compressor (3) are successively disposed, a first exchanger (E1) operating heat exchange between the steam from the evaporator (11) and the steam and dihydrogen mixture from the high temperature electrolyser (2) so as to superheat the steam from the evaporator (11);

the system being **characterised in that**

- the compressor (3) is a chemical compressor supplied with heat by heat exchange with the condenser (E3);
- the condenser (E3) is directly disposed at the outlet of the first exchanger (E1).

2. The system according to claim 1, wherein the first exchanger (E1) is configured such that the steam and dihydrogen mixture exhibits a temperature of at least 200 °C at the outlet.

3. The system according to one of claims 1 and 2, further comprising a dioxygen circuit (21) from the high temperature electrolyser (2), on which a second exchanger (E2) operating heat exchange between the steam from the evaporator (11) and the dioxygen from the high temperature electrolyser (2) is disposed so as to superheat the steam from the evaporator (11).

4. The system according to claim 3, further comprising a third exchanger (E4) operating heat exchange between the liquid water from the main circuit (10) upstream of the evaporator (11) and the dioxygen from the second exchanger (E2) so as to preheat the liquid water entering the evaporator (11).

5. The system according to one of claims 1 to 4, further comprising a first superheater (12) disposed on the main circuit (10) upstream of the high temperature electrolyser (2) so as to superheat the steam from the evaporator (11).

6. The system according to one of claims 1 to 5, further comprising a fourth exchanger (E5) operating heat exchange between the liquid water from the main circuit (10) upstream of the evaporator (11) and the dihydrogen exiting from the condenser (E3) so as to preheat the liquid water entering the evaporator (11).

7. The system according to claim 6, wherein the fourth exchanger (E5) is a condenser.

8. The system according to one of claims 1 to 7, wherein the main circuit (10) receives the condensates from the condenser (E3).

9. The system according to one of claims 6 and 7 and claim 8 in combination, wherein the main circuit (10) has a branch (14) for circulating the condensates from the condenser (E3) and a mixer (15) for the liquid water mixture from the fourth exchanger (E5) and said condensates.

10. The system according to one of claims 1 to 9, wherein the chemical compressor (3) is a metal hydride compressor, in particular a rare earth hydride compressor.

11. The system according to claim 10, wherein the chemical compressor (3) has a single reactor.

12. The system according to one of claims 1 to 11, wherein a purification system (31) and/or a drying system (32) are disposed on the main circuit (10) between the condenser (E3) and the compressor (3).

13. The system according to one of claims 1 to 12, comprising a heat circuit (30) for heat transfer from the condenser (E3) to the compressor (3), the fluid of the heat circuit (30) preferentially having a temperature of at least 120 °C at the inlet of the compressor (3).

14. The system according to claim 13, wherein the heat circuit (30) has a second superheater (33) to superheat the fluid of the circuit (30) at the outlet of the condenser (E3).

15. A dihydrogen production method **characterised in that** it comprises the steps of:

- evaporating liquid water of a main water and dihydrogen circuit (10) in an evaporator (11);
- superheating the steam in at least one first exchanger (E1) at a temperature higher than 500 °C;
- electrolysing the steam in a high temperature electrolyser (2) so as to produce a steam and dihydrogen mixture;
- cooling said steam and dihydrogen mixture by heat exchange via the first exchanger (E1);
- condensing the steam from said mixture directly at the outlet of the first exchanger in a condenser (E3);
- compressing the dihydrogen by a chemical compressor (3), supplied with heat by heat exchange with the condenser (E3).

## FIG. 1a
## Art antérieur

$2 H_2 \rightarrow 4 H^+ + 4 e\text{-}$

$+ 4 e\text{-}$

M

$4 H^+$

$2 H_2O + Azote$

$O_2 + 4 H^+ + 4 e\text{-} \rightarrow 2 H_2O$

$2 H_2$

Air

Anode    Electrode    Cathode

**FIG. 1b**
**Art antérieur**

Pertes convertisseur électrique 1,4 kWh

35,7 kWh

1,66 $H_2O_v$ 800°C, 30b

2

1 kWh

12

1,66 $H_2O_v$ ~700°C, 30b

1/2 $O_2$ 800°C, 30b

E2

1/2 $O_2$ ~660°C, 30b

1 $H_2$ + 0,66 $H_2O_v$ 800°C, 30b

1,66 $H_2O_v$, ~650°C, 30b

E1

11

8,4 kWh

1,66 $H_2O_v$ 234°C, 30b

1,66 $H_2O_l$ 175°C

1 $H_2$ + 0,66 $H_2O_v$ 244°C, 30b

E3

1 $H_2$ + ~0,3 $H_2O_v$ ~160°C, 30b

1,66 $H_2O_l$ 100°C, 30b

13

10

21

E4

1/2 $O_2$ 35°C, 30b

1,66 $H_2O_l$ 25°C, 1b

Eau de refroidissement, 25°C, $H_2O_l$

E5

1 $H_2$ 25°C, 30b

0,66 $H_2O_l$

Electricité ~4 kWh

3

Contenu énergétique 39,4 kWh 1 $H_2$, ~300°C 200 b

FIG. 2a

EP 3 303 659 B1

FIG. 2b

35,7 kWh → 2 → Pertes convertisseur électrique 1,4 kWh

1,66 H₂O$_v$ 800°C, 30b

1 kWh → 12

1,66 H₂O$_v$ ~700°C, 30b

1/2 O₂ 800°C, 30b

1 H₂ + 0,66 H₂O$_v$ 800°C, 30b

~1 H₂O$_l$, 25°C 1b

Contenu énergétique 39,4 kWh

1 H2, 120°C 200b

13

E2

~1 H₂O$_l$, 25°C, 30b

1,66 H₂O$_v$, ~650°C, 30b

~1 H₂O$_l$, ~95°C, 30b

E1

1 H₂ + 0,66 H₂O$_v$ 244°C, 30b

E5

1,66 H₂O$_v$, 234°C, 30b

Q$_{AL}$ 8,4kWh → 11

E3

1 H₂ 120°C 30b

31

1 H₂ ~120°C 30b

32

1 H₂ 25°C 30b

3

Qd

33

H₂O$_l$, 120°C, 3b

1,66 H₂O$_l$ 175°C

30

E4

1/2 O₂, 35°C, 30b

21

10

15

0,66 H₂O$_l$ 30b

14

**FIG. 3**

$H_a$, P1

$H_a$, P1>P2

$Q_a$, T1
T1=25°C

**Absorption
(stockage)**

$Q_a$, T2
T2>T1

**Désorption
(déstockage)**

3

3

EP 3 303 659 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. SIGURVINSSON ; C. MANSILLA ; P. LOVERA ; F.WERKOFF.** Can high temperature steam electrolysis function with geothermal heat?. *International Journal of Hydrogen Energy*
- **RIVERA-TINOCO et al.** *International Journal of Green Energy,* 2010, vol. 7 (1), 1-20
- **LAURENCELLE et al.** *Journal of Alloys and Compounds,* 2009, vol. 475 (1-2), 810-816
- **LAURENCELLE et al.** *International Journal of Hydrogen Energy,* 2006, vol. 31 (6), 762-768
- **M.V. LOTOTSKYY ; V.A. YARTYS ; B.G. POLLET ; R.C. BOWMAN JR.** Metal hydride hydrogen compressors: A review. *International Journal of Hydrogen Energy*